# EUROPÄISCHE PATENTSCHRIFT

(11) **EP 1 689 072 B1**
(45) Veröffentlichungstag und Bekanntmachung des Hinweises auf die Patenterteilung: **24.06.2009**
(21) Anmeldenummer: 06002015.3
(22) Anmeldetag: 01.02.2006
(51) Int. Cl.: H02P 6/14, H02P 6/18

(54) **Verfahren und Schaltungsanordnung zur Regelung eines mehrphasigen bürstenlosen Elektromotors**
Method and circuit arrangement for controlling a multi-phase brushless DC motor
Procédé et disposition de circuit pour commander un moteur multi-phasé à courant continu sans balai

(30) Priorität: 05.02.2005 DE 102005005404; 18.06.2005 DE 102005028344
(43) Veröffentlichungstag der Anmeldung: 09.08.2006
(73) Patentinhaber: Diehl AKO Stiftung & Co. KG, 88239 Wangen (DE)
(72) Erfinder: Zeh, Stefan, 88239 Wangen (DE); Weinmann, Martin, 88339 Bad Waldsee (DE); Olarescu, Valeriu, 88239 Wangen (DE); Müller, Alexander, 88339 Bad Waldsee - Reute (DE)
(74) Vertreter: Diehl Patentabteilung

(56) Entgegenhaltungen:
- US-A1- 2003 184 170
- PARASILITI, F.; PETRELLA, R.; TURSINI, M.: "Low cost phase current sensing in DSP based AC drives" ISIE 1999, Bd. 3, Juli 1999 (1999-07), Seiten 1284-1289, XP002412877
- BLAABJERG, F.; PEDERSEN, J.K.; JAEGER, U.; THOEGERSEN, P.: "Single current sensor technique in the DC link of three-phase PWM-VS inverters: a review and a novel solution" IEEE TRANSACTIONS ON INDUSTRY APLICATIONS, Bd. 33, Nr. 5, September 1997 (1997-09), Seiten 1241-1253, XP002412878

## Beschreibung

Die Erfindung betrifft ein Verfahren zur Regelung eines mehrphasigen bürstenlosen Elektromotors, wobei die den Phasen zugeordneten Motorphasenströme durch getaktete Variationen des jeweils anliegenden elektrischen Potenzials erzeugt werden. Die Erfindung betrifft weiter eine Schaltungsanordnung zur Durchführung eines derartigen Verfahrens zur Regelung.

Bürstenlose Elektromotoren werden durch wechselweises Beschalten ihrer Wicklungen oder Spulen derart angesteuert, dass sich ein rotierendes magnetisches Feld ergibt, welches ein mechanisches Drehmoment zwischen dem Stator und dem Rotor des Elektromotors hervorruft. Zur Erzeugung des rotierenden magnetischen Feldes enthält ein derartiger Elektromotor mindestens zwei, häufig drei Spulen, die zueinander um einen Winkel versetzt bezüglich der Rotorachse angeordnet sind. Häufig sind die Spulen und damit das rotierende magnetische Feld dem Stator des Elektromotos zugeordnet, während der Rotor einen Permanentmagneten umfasst.

Die den Wicklungen oder Spulen des Elektromotors zugeordneten Ströme werden insbesondere als Motorphasenströme bezeichnet. Durch die Motorphasenströme werden in den Wicklungen die Phasen des rotierenden magnetischen Feldes erzeugt, die sich zu dem Gesamtfeld addieren. Sind die Wicklungen des Elektromotors sternförmig geschaltet, so entsprechen die in den Zuleitungen gemessenen Ströme den Motorphasenströmen.

Zur Ansteuerung von bürstenlosen Elektromotoren werden Umrichter verwendet, die intelligent zwischen den Potenzialen eines Gleichspannungskreises schalten, wodurch die gewünschten Motorphasenströme erzeugt werden. Dabei ist jeder Zuleitung einer Wicklung des Elektromotors ein Paar von Schaltern oder Transistoren zugeordnet, die ein Umschalten zwischen den beiden Potenzialen des Gleichspannungskreises erlauben. Auf diese Weise werden die den Phasen zugeordneten Motorphasenströme durch getaktete Variation des jeweils anliegenden elektrischen Potenzials erzeugt.

Bürstenlose Elektromotoren sind weit verbreitet. Sie werden ebenso als Antrieb eines Festplattenlaufwerks wie als Fahrzeugantrieb eingesetzt. Weiter finden bürstenlose Elektromotoren Verwendung bei Haushaltsgeräten, wie Kühlschränken und Waschmaschinen. Sie sind auch eingesetzt in Lüftern, Kompressoren oder Pumpen.

Zur Regelung eines bürstenlosen Elektromotors ist es günstig, die Motorphasenströme zu kennen. Überschreitet beispielsweise ein Motorphasenstrom einen vorgegebenen Sollwert, so kann dies zur Überhitzung des Elektromotors und damit zu einer unnötigen Energieaufnahme bis hin zu einer Zerstörung der zugeordneten Elektronik führen. Weiter ist die Kenntnis der Motorphasenströme wichtig, um das Drehmoment des Elektromotors einstellen zu können. Zudem kann es ohne Überwachung der Motorphasenströme in einem bürstenlosen Elektromotor zu einer Oszillation der Motorphasenströme kommen. Durch Schwebung können hierbei wiederum für die Energieaufnahme oder die Elektronik nachteilige Spitzenwerte eines Motorphasenstroms entstehen.

Werden die Motorphasenströme in den jeweiligen Zuleitungen gemessen, so sind nachteiligerweise entsprechend viele Stromsensoren und damit eine entsprechend aufwändige Auswerteelektronik erforderlich. Da sich die Motorphasenströme beispielsweise bei einer sternförmigen Beschaltung des Elektromotors gemäß der Kirchhoff'schen Knotenregel addieren, kann die Zahl der notwendigen Stromsensoren auch reduziert werden und ein nicht direkt gemessener Motorphasenstrom aus den gemessenen Motorphasenströmen abgeleitet werden. Diese Ableitung des oder der nicht gemessenen Motorphasenströme erfordert jedoch nachteiligerweise wiederum entsprechenden Aufwand und verteuert die Auswerteelektronik.

In der WO 03/105329 A1 wird zur Ansteuerung und zur Regelung eines bürstenlosen Elektromotors vorgeschlagen, die Motorphasenströme durch einen einzigen in einer gemeinsamen Rückleitung der Motorphasenströme angeordneten Stromsensor zu messen. Damit mittels des einzigen Stromsensors jedoch die Motorphasenströme gemessen werden können, ist nachteiligerweise eine komplizierte Synchronisation der Taktung des den Wicklungen jeweils anliegenden elektrischen Potenzials notwendig. Weiter wird zur Messung der Motorphasenströme eine schnelle Sample-Einrichtung erforderlich. Die Synchronisation des Stromsensors mit den Schaltzuständen ist aufwändig und erfordert zudem teuere Regelungseinheiten.

Ferner offenbart die US 2003/0184170 A1 eine Steuerung eines mehrphasigen bürstenlosen Elektromotors gemäß dem Oberbegriff von Anspruch 1 Anspruch 6. Dabei erfolgt bei dieser bekannten Schaltungsanordnung eine Stromerfassung in einer Rückleitung über einen Shunt, welche mit einem EMK-Sensor synchronisiert wird und quantitativ durchgeführt wird.

Es ist Aufgabe der Erfindung, ein Verfahren und eine Schaltungsanordnung zur Regelung eines mehrphasigen bürstenlosen Elektromotors der eingangs genannten Art bereitzustellen, bei denen in einfacher Art und Weise und kostengünstig die Motorphasenströme berücksichtigt werden.

Diese Aufgabe wird für ein Verfahren zur Regelung eines mehrphasigen bürstenlosen Elektromotors, wobei die den Phasen zugeordneten Motorphasenströme durch getaktete Variation des jeweils anliegenden elektrischen Potenzials mittels Pulsweitenmodulation erzeugt werden und die Motorphasenströme dem Elektromotor über eine gemeinsame Rückleitung abfließen, nach Anspruch 1 dadurch gelöst, dass jeweils innerhalb eines Takts der Pulsweitenmodulation in der Rückleitung der maximale Stromspitzenwert aller Motorphasenströme erfasst und mit einem vorgegebenen Referenzwert verglichen wird, und das Vergleichsergebnis Eingang in eine Regelgröße findet.

Die Erfindung geht dabei in einem ersten Schritt von der Überlegung aus, dass die Erfassung der momentanen Motorphasenströme zur Regelung des Elektromotors unnötig viele Informationen beinhaltet. So ist beispielsweise der zeitliche Verlauf jedes Motorphasenstroms für die Regelung nicht unbedingt erforderlich. Vielmehr ist es hinsichtlich einer Wirkungsgradoptimierung ausreichend, Kenntnis über den in einer Periode auftretenden Maximalwert eines Motorphasenstroms zu haben. Es genügt also, für jeden Takt der Variation des jeweils anliegenden elektrischen Potenzials Kenntnis über die Größe des momentan größten Motorphasenstroms zu haben.

Weiter geht die Erfindung von der Erkenntnis aus, dass bei der üblichen Beschaltung eines bürstenlosen Elektromotors das die Taktung der Variation des Potenzials erzeugende Umschaltemittel von einem Gleichspannungskreis gespeist wird. Bei einer derartigen Beschaltung fließen die Motorphasenströme im Elektromotor über eine gemeinsame Rückleitung ab. Insofern beinhaltet der in der gemeinsamen Rückleitung gemessene Strom ein Abbild der einzelnen Motorphasenströme.

Schließlich erkennt die Erfindung in einem dritten Schritt, dass sich dann, wenn die Motorphasenströme durch getaktete Variation des jeweils anliegenden elektrischen Potenzials erzeugt werden, sich auch innerhalb einer vorgegebenen Zeitdauer, die durch den Takt bestimmt ist, sich auch derjenige Potenzialbeschaltungszustand einstellt, der den jeweiligen Maximalwert aller Motorphasenströme in die Rückleitung einleitet. Dies liegt darin begründet, dass sich der eher träge Motorphasenstrom jeweils aus den einzelnen getakteten Potenzialvariationen ergibt.

In Erkenntnis dieser Gegebenheit genügt es demnach, in der gemeinsamen Rückleitung einen Stromspitzenwert zu erfassen. Der innerhalb eines Zeitraumes erfasste Stromspitzenwert entspricht dann dem innerhalb dieses Zeitraumes vorliegenden Spitzenwert aller Motorphasenströme. Da die Motorphasenströme phasenverschoben sind, wird auf diese Art und Weise abwechselnd für jeden Motorphasenstrom auch sein zugehöriger Spitzenwert erfasst. Es braucht lediglich innerhalb des vorgegebenen Zeitraumes von den getaktet abgebildeten Strömen in der gemeinsamn Rückleitung der höchste Wert festgehalten zu werden.

Das beschriebene Verfahren erlaubt in einfacher Art und Weise eine Regelung eines bürstenlosen Elektromotors, bei welchem die Motorphasenströme zur, Regelung berücksichtigt werden. Wird innerhalb einer vorgegebenen Zeitdauer jeweils der in der gemeinsamen Rückleitung gemessene höchste Wert als Spitzenwert festgehalten, so entspricht dieser dem jeweiligen Spitzenwert aller Motorphasenströme. Dieser kann dann Eingang in eine Regelgröße für den Elektromotor finden. Mit einem derartigen Verfahren lassen sich mit günstigen Mitteln zur Polarisationserkennung mindestens eines Motorphasenstromes Antriebe mit hoher Trägheit, wie z.B. Lüfter, Kompressoren oder Pumpen, ohne Positions- oder Drehzahlgeber betreiben.

Lediglich zum besseren Verständnis des Stromflusses ist in dieser Anmeldung von einer Zuleitung und einer Rückleitung in dem Gleichspannungskreis die Rede. In dieser Sprechweise wird der Stromspitzenwert in der gemeinsamen Rückleitung, in welche die Motorphasenströme dem Elektromotor abfließen erfasst. Gleichwohl kann der Stromspitzenwert auch in dem als Zuleitung bezeichneten Zweig des Gleichspannungskreises angeordnet sein. Hierzu braucht gedanklich nur zwischen technischer und tatsächlicher Stromrichtung umgeschaltet zu werden. Es können demnach die Begriffe Zuleitung und Rückleitung beliebig ausgetauscht werden.

In vorteilhafter Weise erfolgt die getaktete Variation des elektrischen Potenzials mittels Pulsweitenmodulation. Bei der Pulsweitenmodulation (abgekürzt: PWM) wird die Ein- und Ausschaltzeit eines Rechtecksignals bei fester Grundfrequenz variiert. Über die Dauer der Einschaltzeit kann dabei für einen trägen Verbraucher die im Mittel anliegende Spannung variiert werden. Ist das Recktecksignal beispielsweise nur die Hälfte der gesamt zur Verfügung stehenden Zeit eingeschaltet, so sieht der Verbraucher im Mittel nur die Hälfte der während der Einschaltzeit anliegenden Spannung.

Das PWM-Verfahren wird insbesondere zur Ansteuerung von bürstenlosen Elektromotoren verwendet. Dabei werden während eines PWM-Taktes beispielsweise die unterschiedlichen Schaltzustände eines Umschaltemittels zur Variation des den Motorklemmen anliegenden Potenzials unterschiedlich lange beibehalten. Auf diese Art und Weise können die gewünschten phasenversetzten Motorphasenströme erzeugt werden. Da sich ein und derselbe Motorphasenstrom durch verschiedene Schaltungszustände einschließlich ihrer jeweiligen Dauer erzeugen lässt, sind verschiedene Ansteuerungen mit jeweiligen Vor- und Nachteilen realisierbar.

Zur Ansteuerung eines Elektromotors kann beispielsweise auf PWM-Umrichter zurückgegriffen werden, die mit einem PWM-Takt von etwa 50 - 200 Mikrosekunden ansteuerbar sind. Innerhalb eines solchen PWM-Taktes kann der Umrichter alle ihm möglichen Schaltzustände einnehmen. Im Falle der Ansteuerung eines üblichen dreiphasigen Elektromotors weist der benötigte Umrichter für jede der drei Zuleitungen jeweils zwei Schalter oder Transistoren auf, die die Zuleitung abwechselnd zwischen zwei Potenzialen hin- und herschalten. Bezüglich der einzunehmenden Potenzialzustände der drei Zuleitungen können mittels der insgesamt sechs Schalter eines derartigen Umrichters acht verschiedene Beschaltungszustände eingenommen werden. Zur Ansteuerung werden üblicherweise während eines PWM-Taktes von den möglichen acht Schaltzuständen nur drei oder vier Schaltzustände eingenommen. Dabei ist für übliche Motoren wie Permanentmagnet-Synchronmotoren oder Induktionsmotoren innerhalb eines PWM-Taktes auch stets derjenige Schaltzustand für kurze Zeit gewählt, welcher den aktuell höchsten Motorphasenstrom in der Rückleitung abbildet.

Insofern ist es vorteilhaft, wenn im Falle einer Pulsweitenmodulation der Stromspitzenwert in der gemeinsamen Rückleitung jeweils innerhalb eines Taktes der Pulsweitenmodulation erfasst wird.

Erfindungsgemäß wird der Stromspitzenwert mit einem vorgegebenen Referenzwert verglichen. Dies kann in einfacher Art und Weise dadurch realisiert werden, dass mittels eines elektronischen Vergleichsbauteils der innerhalb einer vorgegebenen Zeitdauer gemessene Strom mit dem vorgegebenen Referenzwert verglichen wird. Überschreitet der im Rücklauf gemessene Strom den vorgegebenen Referenzwert, wird ein entsprechendes Signal für die Regelung ausgegeben. Alternativ kann auch die Differenz zwischen den im Rücklauf gemessenen Strom und dem vorgegebenen Referenzwert für die Regelung verwendet werden.

Für eine einfache und kostengünstige Regelung ist es vorteilhaft, wenn die Regelung erst bei Überschreiten des Referenzwerts durch den gemessenen Strom einsetzt. In diesem Fall wird davon ausgegangen, dass dann, wenn der innerhalb der vorgegebenen Zeitdauer erfasste Maximalwert des Stromes unterhalb des vorgegebenen Referenzwerts liegt, nicht in die Regelung des Elektromotors eingegriffen werden braucht. Erst bei Überschreiten des Referenzwerts findet eine entsprechende Regelung des Elektromotors statt. Mit einer derartigen mit einfachen Mitteln zu realisierenden Regelung können in einfacher Art und Weise Oszillationen der Motorphasenströme verhindert und damit ein ruhiger Motorlauf sichergestellt oder Schäden an der Elektronik vermieden werden.

Auch bei einer derartigen einfachen, eher qualitativen Erfassung des Stromspitzenwerts mittels eines Vergleiches mit einem vorgegebenen Referenzwert ist in vorteilhafter Weise eine quantitative Erfassung des Stromspitzenwerts möglich, wenn der Referenzwert adaptiert wird.

Die zweitgenannte Aufgabe wird durch eine Schaltungsanordnung zur Regelung eines mehrphasigen bürstenlosen Elektromotors, die einen Gleichspannungskreis und eine in den Gleichspannungskreis zwischen einer Zuleitung und einer Rückleitung geschaltete, jeweils an die Motorklemmen der Wicklungen des Elektromotors anschließbare, Umschaltemittel enthaltende Speiseschaltung aufweist, wobei die Umschaltemittel zur getakteten Variation des den Motorklemmen jeweils anzulegenden Potenzials mittels Pulsweitenmodulation vorgesehen sind, und wobei ein in die Rückleitung geschalteter Stromsensor vorgesehen ist, nach Anspruch 4 durch eine an den Stromsensor angeschlossene Auswerteschaltung zur Erfassung eines Stromspitzenwertes und eine mit der Auswerteschaltung verbundene Regeleinheit gelöst, auf die ein Ausgangswert der Auswerteschaltung als Eingangsgröße aufgeschaltet ist. Dabei ist die Auswerteschaltung der Schaltungsanordnung als eine Komparator-Schaltung ausgebildet, die den in der Rückleitung gemessenen Strom mit einem Referenzwert vergleicht, und bei Überschreiten des Referenzwerts als Ausgangswert ein Triggersignal ausgibt. Durch eine derartige Schaltung können leicht und in kostengünstiger Weise die Motorphasenströme auf Überschreiten eines vorgegebenen Referenzwerts überprüft werden. Durch eine entsprechende Regelung wird hierdurch ein Oszillieren der Motorphasenströme und eine Schädigung der Elektronik des Elektromotors durch zu hohe Motorphasenströme vermieden.

Mit einer derartigen Schaltungsanordnung lässt sich das beschriebene Verfahren zur Regelung eines bürstenlosen Elektromotors mit den genannten Vorteilen durchführen.

In vorteilhafter Weise ist die Speiseschaltung zur Pulsweitenmodulation des anzulegenden Potenzials ausgestaltet. Insbesondere ist dies der Fall, wenn die Speiseschaltung als Umschaltemittel einen PWM-Umrichter enthält.

In kostengünstiger Art und Weise umfasst der Stromsensor einen ohmschen Widerstand oder ist als ein solcher selbst ausgebildet.

Bei Pulsweitenmodulation zur Ansteuerung des Elektromotors ist es vorteilhaft, wenn die Auswerteschaltung zur Erfassung des Stromspitzenwerts jeweils innerhalb eines Takts der Pulsweitenmodulation ausgelegt ist. Wie erwähnt, wird bei üblicher Ansteuerung eines bürstenlosen Elektromotors innerhalb eines PWM-Taktes für kurze Zeit auch derjenige Schaltungszustand eingenommen, der dem jeweils höchsten Wert alller Motorphasentröme entspricht.

Ausführungsbeispiele der Erfindung werden anhand einer Zeichnung näher erläutert. Dabei zeigen:
- Fig. 1: schematisch eine Schaltungsanordnung zur Steuerung eines bürstenlosen Elektromotors, wobei in einer gemeinsamen Rückleitung der Motorphasenströme ein Stromsensor mit einer daran angeschlossenen Peak-Hold-Einrichtung angeordnet ist,
- Fig. 2: eine Schaltungsanordnung gemäß Fig. 1, wobei jedoch an den in der gemeinsamen Rückleitung angeordneten Stromsensor eine Komparator-Schaltung zum Vergleich des gemessenen Stroms mit einem Referenzwert angeordnet ist,
- Fig. 3: schematisch die Schaltungsanordnung für eine Komparator-Schaltung,
- Fig. 4: schematisch die Schaltungsanordnung einer Peak-Hold-Einrichtung,
- Fig. 5: den zeitlichen Verlauf der Motorphasenströme für einen dreiphasigen Elektromotor und
- Fig. 6: für eine PWM-Ansteuerung eines Elektromotors den in der gemeinsamen Rückleitung gemäß Schaltungsanordnungen 1 oder 2 innerhalb eines PWM-Taktes gemessenen Stromverlauf.

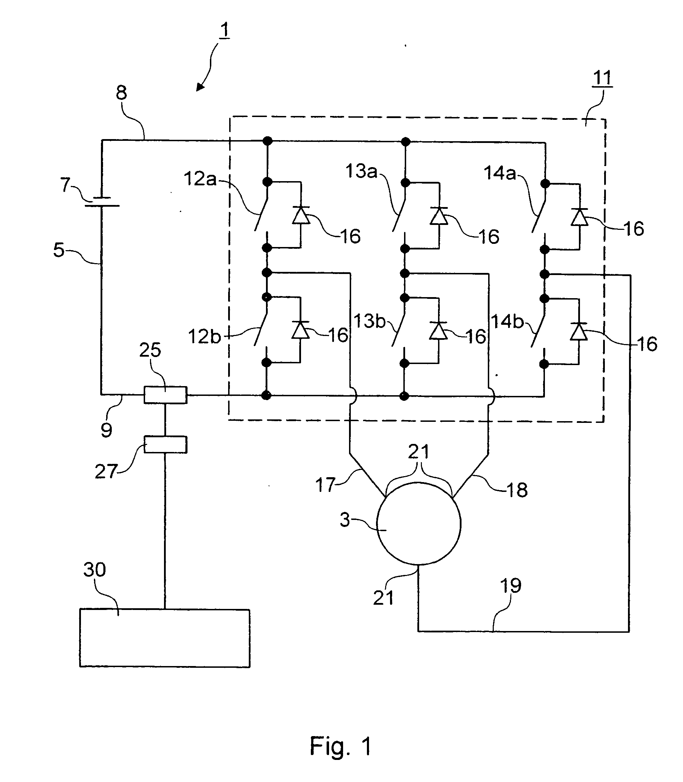

In Fig. 1 ist eine Schaltungsanordnung 1 zur Ansteuerung eines bürstenlosen dreiphasigen Elektromotors 3 dargestellt. Die Schaltungsanordnung 1 umfasst hierzu einen Gleichspannungskreis 5 mit einem Kondensator 7. Zwischen eine Zuleitung 8 und einer Rückleitung 9 ist ein Umrichter 11 zur getakteten Variation des dem Elektromotor 3 anzulegenden elektrischen Potenzials geschaltet.

Der pulsweitenmodulierte Umrichter 11 umfasst jeweils Paare von als Transistoren ausgebildeten Schaltern 12a,12b sowie 13a,13b und 14a,14b. Jeder einzelne dieser Schalter 12a,12b,13a,13b,14a,14b ist mit gegen die Stromrichtung gerichteten Freilaufdioden 16 überbrückt. Zwischen den Schalterpaaren 12a,12b, sowie 13a,13b und 14a,14b sind jeweils eine erste Zuleitung 17, eine zweite Zuleitung 18 bzw. eine dritte Zuleitung 19 eingeschaltet. Diese Zuleitungen sind mit den drei Motorklemmen 21 des Elektromotors 3 verbunden.

Werden die Schalter 12a,13a und 14a geschlossen, so werden über die Zuleitungen 17,18 bzw. 19 die entsprechenden Motorklemmen 21 jeweils auf hohes Potenzial (high) gelegt. Durch Schließen der Schalter 12b,13b und 14b werden die Motorklemmen 21 jeweils auf niedriges Potenzial (low) geschaltet. Mit den insgesamt sechs Schaltern 12a,12b,13a,13b,14a,14b lassen sich insgesamt acht Schaltungszustände erreichen, in denen jede der Klemmen 21 entweder auf Potenzial "high" oder Potenzial "low" liegt. Bei sechs dieser Schaltungszustände liegt jeweils eine der Klemmen 21 gegenüber den anderen beiden Klemmen 21 auf anderem Potenzial. In den verbleibenden zwei Schaltungszuständen befinden sich alle Klemmen 21 auf Potenzial "high" bzw. auf Potenzial "low".

Durch entsprechende Modulation der acht Schaltungszustände wird in dem bürstenlosen Elektromotor 3 ein rotierendes magnetisches Feld aufgebaut, durch welches der Rotor des Elektromotors 3 in mechanische Drehbewegung versetzt wird.

Über die gemeinsame Rückleitung 9 fließen die den jeweiligen Zuleitungen 17,18 und 19 zugeordneten Motorphasenströme in den Elektromotor 3 ab. Mittels eines in der Rückleitung 9 angeordneten Stromsensors 25 wird jeweils für einen PWM-Takt der innerhalb dieses PWM-Taktes gemessene höchste Stromwert erfasst. Dies geschieht über eine Peak-Hold-Schaltung 27, deren Ausgang in eine Auswerteschaltung 30 mündet. Die Auswerteschaltung 30 ist - nicht eingezeichnet - mit einer Regeleinheit zur Regelung bzw. Steuerung der Schaltungsanordnung 11 verbunden.

Der Umrichter 11 wird mit einem PWM-Takt mit einer Dauer zwischen 50 - 200 Mikrosekunden angesteuert. Dies entspricht einer Frequenz zwischen 5 und 20 kHz, was bei letzterem Wert außerhalb des menschlichen Hörvermögens liegt. Innerhalb jedes Takts wird der Elektromotor 3 durch Einnahme von vier der möglichen acht Schaltzustände des Umrichters 11 angesteuert. Durch dieses hochfrequente Umschalten der einzelnen Schaltzustände des Umrichters 11 springt der in der Rückleitung 9 mittels des Stromsensors 25 gemessene Strom mit hoher Dynamik. Für einen PWM-Takt wird mittels der Peak-Hold-Einrichtung 27 der jeweils innerhalb eines PWM-Takts gemessene höchste Stromwert festgehalten. Dieser entspricht, da innerhalb eines PWM-Takts stets für einen kurzen Zeitraum der Schaltungszustand eingenommen wird, der dem höchsten Stromwert aller Motorphasenströme entspricht, der jeweilige Stromspitzenwert aller Motorphasenströme. Über die Auswerteschaltung 30 wird dieser Stromspitzenwert zur Regelung der Schaltungsanordnung 1 und damit des Elektromotors 3 herangezogen.

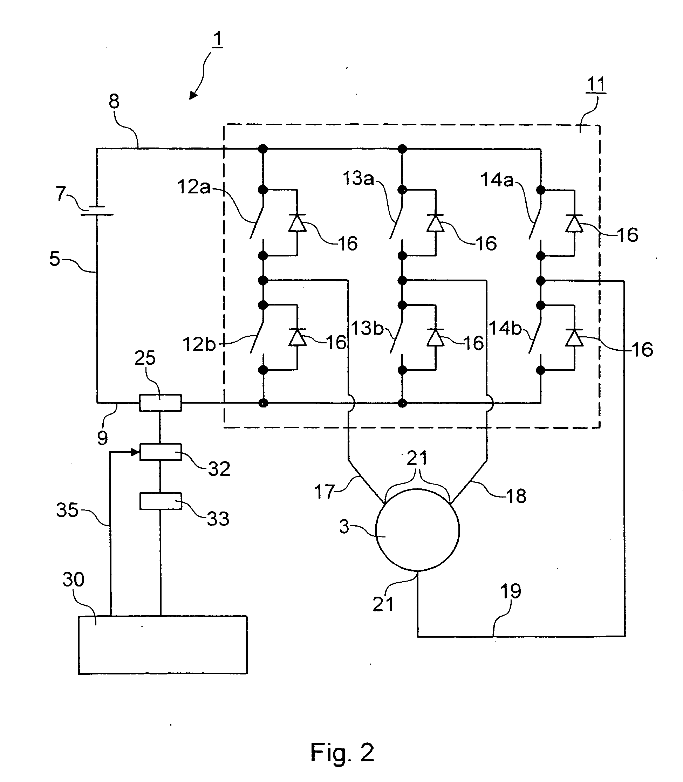

Fig. 2 zeigt die im Wesentlichen identische Schaltungsanordnung 11 gemäß Fig. 1. Dabei ist jedoch an den in der Rückleitung 9 angeordneten Stromsensor 25 eine Vergleichsschaltung 32 und ein damit verbundener Triggergenerator 33 angeschlossen. Der Ausgang des Triggergenerators 33 ist mit der Auswerteschaltung 30 verbunden. Über eine Signalleitungg 35 gibt die Auswerteschaltung 30 einen Referenzwert vor.

Innerhalb eines PWM-Taktes werden die jeweils gemessenen Ströme mittels der Vergleichsschaltung 32 mit dem vorgegebenen Referenzwert verglichen. Überschreitet der gemessene Strom den Referenzwert, so gibt die Vergleichsschaltung ein Ausgangssignal aus, auf welches der Triggergenerator 33 anspricht. Dieser wiederum sendet ein entsprechendes Ausgangssignal an die Auswerteschaltung 30, die mit einer Regeleinheit zur Regelung bzw. Steuerung der Schaltungsanordnung 11 verbunden ist.

Mit der in Fig. 2 gezeigten Schaltungsanordnung 11 wird der Elektromotor 3 auf Überschreiten der Motorphasenströme eines vorgegebenen Referenzwerts geregelt. Hierdurch wird ein Oszillieren der Motorphasenströme und damit eine Gefährdung für die Elektronik sicher vermieden.

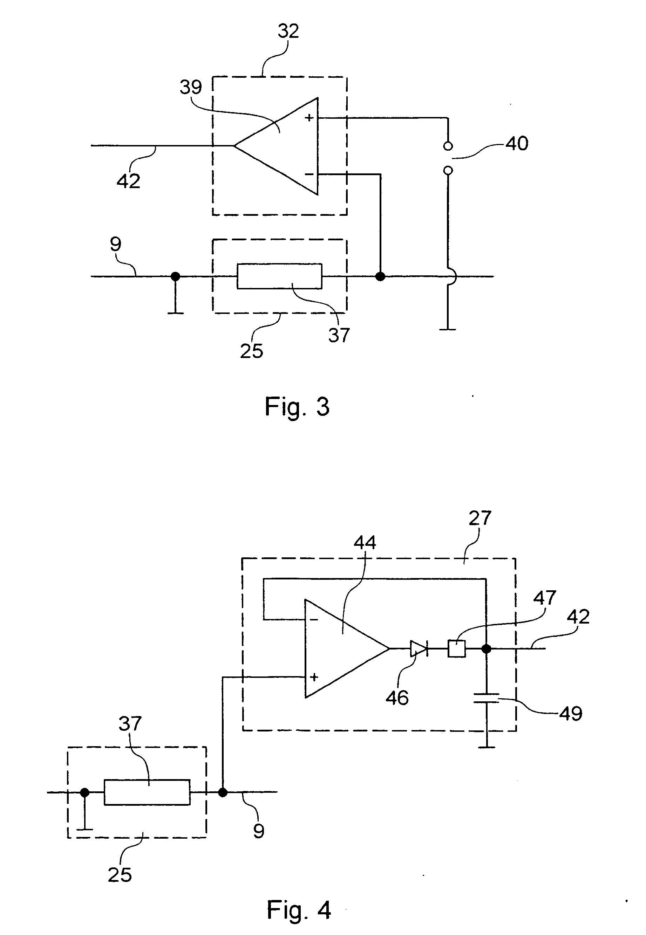

Fig. 3 zeigt eine Schaltungsanordnung zur Auswertung des in der Rückleitung gemessenen Stromes entsprechend der Schaltungsanordnung 1 in Fig. 2. Dabei ist der in der Rückleitung 9 angeordnete Stromsensor 25 als ohmscher Widerstand 37 ausgebildet. Die über dem ohmschen Widerstand 37 abfallende Spannung, die ein Maß für den gemessenen Strom ist, wird mittels der Vergleichsschaltung 32, mit einem vorgegebenen Sollwert verglichen. Hierzu vergleicht ein Komparator 39 die am ohmschen Widerstand 37 abfallende Spannung mit einer vorgegebenen Referenzspannung 40, die einem einzustellenden Maximalspitzenstromwert entspricht.

Überschreitet die an dem ohmschen Widerstand 37 abfallende Spannung den Wert der vorgegebenen Referenzspannung 40, so geht das Ausgangssignal 42 des Komparators 39 auf low. Bedingt durch die hochfrequent wechselnden Schaltzustände des Umrichters 11 können derartige Low-Zustände von kurzer Dauer, insbesondere eine Mikrosekunde, sein.

Fig. 4 zeigt eine Schaltungsanordnung für eine Peak-Hold-Einrichtung 27 gemäß der Schaltungsanordnung 1 in Fig. 1. Wiederum ist der Stromsensor 25 dabei als ein ohmscher Widerstand 37 ausgebildet. Die Peak-Hold-Einrichtung 27 umfasst dabei einen Komparator 44, an den ausgangsseitig eine Diode 46 und ein ohmscher Widerstand 47 geschaltet sind. Dabei wird über den positiven Eingang des Komparators 44 die über den ohmschen Widerstand 37 abfallende Spannung erfasst, während der Minuseingang des Komparators 44 mit einem die Ausgangsspannung des Komparators 44 festhaltenden Kondensator rückgekoppelt ist.

Für eine vorgegebene Zeitdauer entspricht die in dem Kondensator 49 gespeicherte Ladung dem während der Zeitdauer gemessenen höchsten Stromwert. Entsprechend der in Fig. 1 gezeigten Schaltungsanordnung 1 wertet nach mindestens einem Zyklus der Pulsweitenmodulation die Auswerteschaltung 30 den Ausgangswert der Peak-Hold-Einrichtung 27 aus und setzt die Peak-Hold-Einrichtung 27 wieder zurück. Dies geschieht durch Messung des Potenzials der Ausgangsleitung 42, welches dann zur weiteren Verwertung digital gewandelt wird. Anschließend wird der Kondensator 49 mit einer kurzen Klemmung auf Masse entladen.

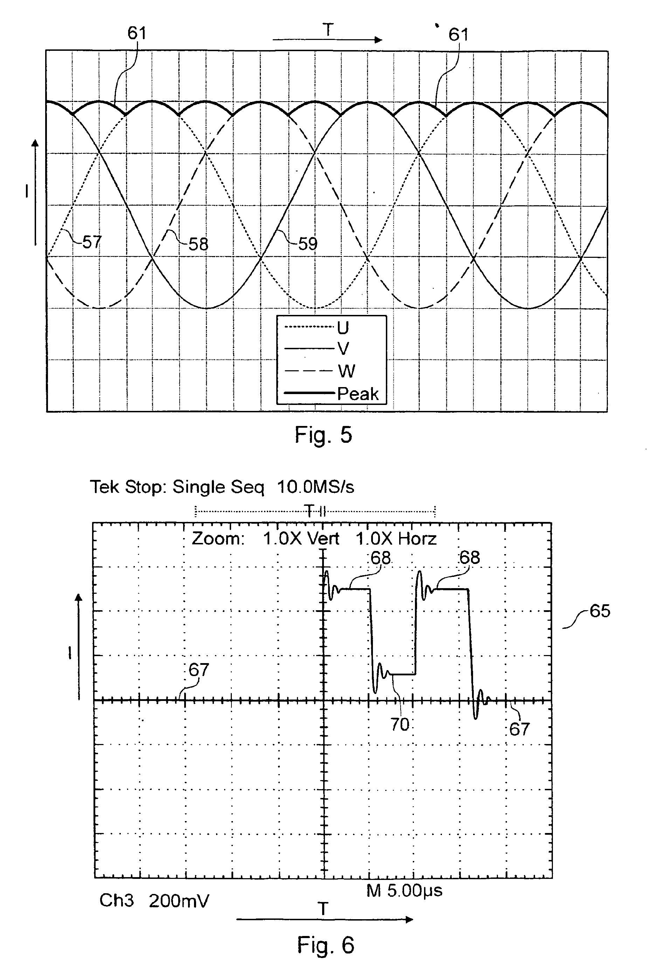

Fig. 5 zeigt zum Verständnis für einen bürstenlosen dreiphasigen Elektromotor den Verlauf der phasenversetzten Motorphasenströme 57,58,59. In dem gezeigten Diagramm ist die Zeit T auf der Abszisse und der Strom 1 auf der Ordinate aufgetragen. Man erkennt deutlich den sinusförmigen Verlauf der drei Motorphasenströme 57,58,59.

Jeder einzelne der gezeigten Motorphasenströme 57,58,59 wird abwechselnd durch PWM-Taktung des Umrichters 11 gemäß der in den Fig. 1 oder 2 gezeigten Schaltungsanordnungen 1 erzeugt. Dabei ist eine PWM-Periode um etwa einen Faktor 100 kürzer als eine Periode des gezeigten Stromverlaufs.

Da sich während eines PWM-Takts stets auch derjenige Schaltungszustand für kurze Zeit einstellt, der dem höchsten Stromwert aller Motorphasenströme entspricht, wird mittels des in der Rückleitung 9 angeordneten Stromsensors 25 (siehe Fig. 1 und 2) innerhalb eines PWM-Takts stets als Maximalwert der darin gemessenen Ströme der Stromspitzenwert aller Motorphasenströme gemessen. Insofern wird bei Messung des jeweiligen maximalen Stromes während einer PWM-Takts von den drei Motorphasenströmen 57,58,59 jeweils der Stromspitzenwert ermittelt. Da der in der Rückleitung 9 fließende Strom stets in die gleiche Richtung fließt, wird damit der betragsmäßig größte Stromspitzenwert aller Motorphasenströme während eines PWM-Takts gemessen. Es ergibt sich also bei einer derartigen Erfassung des maximalen Stromwertes während einer PWM-Takts der in Fig. 5 eingezeichnete Verlauf für den betragsmäßigen Stromspitzenwert 61 aller Motorphasenströme 57,58,59. Dieser Stromspitzenwert 61 findet Eingang in eine Regelgröße zur Regelung der Steuerschaltung 1 gemäß Fig. 1 oder 2.

Fig. 6 zeigt schließlich für einen PWM-Takt 65 den mittels des in der Rückleitung 9 der Schaltungsanordnungen gemäß Fig. 1 oder Fig. 2 angeordneten Stromsensors 25 gemessenen Stromes. Dabei ist wiederum die Zeit T auf der Abszisse und der Strom I auf der Ordinate aufgetragen. Der gezeigte PWM-Takt beträgt insgesamt fünfzig Mikrosekunden. Damit entspricht die gezeigte Einteilung jeweils fünf Mikrosekunden.

Während der ersten 25 Mikrosekunden wird von dem Umrichter 11 ein Schaltungszustand 67 eingenommen, in welchem kein Strom in der Rückleitung 9 fließt. Dabei kann es sich entweder um den Schaltungszustand handeln, in welchem alle Schalter 12a,13a,14a oder alle Schalter 12b,13b,14b geschlossen sind. Während etwa der nächsten fünf Mikro-Sekunden wird ein Schaltungszustand 68 eingenommen, in welchem beispielsweise der Motorphasenstrom 58 einen negativen Wert aufweist. Anschließend wird für fünf Mikrosekunden ein Schaltzustand 70 geschaltet, in welchem beispielsweise der Motorphasenstrom 57 einen positiven Wert aufweist, um anschließend wieder für fünf Mikrosekunden in den Schaltungszustand 68 überzugehen. Abgeschlossen wird die PWM-Periode 65 wieder mit dem Schaltungszustand 67, in welchem alle Klemmen 21 des Eektromotors 3 auf demselben Potenzial liegen.

### Bezugszeichenliste

- 1: Schaltungsanordnung
- 3: Elektromotor
- 5: Gleichspannungskreis
- 7: Kondensator
- 8: Zuleitung
- 9: Rückleitung
- 11: Umrichter
- 12a, 13a, 14a: Schalter
- 12b, 13b, 14b: Schalter
- 16: Freilaufdioden
- 17: erste Zuleitung
- 18: zweite Zuleitung
- 19: dritte Zuleitung
- 21: Motorklemmen
- 25: Strommesser
- 27: Peak-Hold-Schaltung
- 30: Auswerteschaltung
- 32: Vergleichsschaltung
- 33: Triggergenerator
- 35: Signalleitung
- 37: Widerstand
- 39: Komparator
- 40: Referenzspannung
- 42: Ausgangsleitung
- 44: Komparator
- 46: Diode
- 47: Widerstand
- 49: Kondensator
- T: Zeit
- I: Motorstrom
- 57, 58, 59: Motorphasenströme
- 61: Stromspitzenwert
- 65: PWM-Takt
- 67, 68, 70: Schaltzustände

## Patentansprüche

1. Verfahren zur Regelung eines mehrphasigen bürstenlosen Elektromotors (3), wobei die den Phasen zugeordneten Motorphasenströme (57, 58, 59) durch getaktete Variation des jeweils anliegenden elektrischen Potenzials mittels Pulsweitenmodulation erzeugt werden, wobei die Motorphasenströme (57,58,59) dem Elektromotor (3) über eine gemeinsame Rückleitung (9) abfließen,
**dadurch gekennzeichnet,**
**dass** jeweils innerhalb eines Takts (65) der Pulsweitenmodulation in der Rückleitung (9) der maximale Stromspitzenwert (61) aller Motorphasenströme (57, 58, 59) erfasst und mit einem vorgegebenen Referenzwert verglichen wird, und das Vergleichsergebnis Eingang in eine Regelgröße findet.

2. Verfahren nach Anspruch 1,
**dadurch gekennzeichnet,**
**dass** die Regelung bei Überschreiten des Referenzwerts durch den gemessenen Strom einsetzt.

3. Verfahren nach Anspruch 1 oder 2,
**dadurch gekennzeichnet,**
**dass** durch Variation des Referenzwerts der Stromspitzenwert (61) quantitativ erfasst wird.

4. Schaltungsanordnung (1) zur Regelung eines mehrphasigen bürstenlosen Elektromotors (3), insbesondere zur Durchführung des Verfahrens gemäß einem der vorangehenden Ansprüche, mit einem Gleichspannungskreis (5) und einer in den Gleichspannungskreis (5) zwischen einer Zuleitung (8) und einer Rückleitung (9) geschalteten, jeweils an die Motorklemmen (21) der Wicklungen des Elektromotors (3) anschließbaren, Umschaltemittel enthaltenden Speiseschaltung, wobei die Umschaltemittel zur getakteten Variation des den Motorklemmen (21) jeweils anzulegenden Potenzials mittels Pulsweitenmodulation vorgesehen sind, und mit einem in die Rückleitung (9) geschalteten Stromsensor (25), und weiter mit einer an den Stromsensor (25) angeschlossenen Auswerteschaltung (30) zur Erfassung eines Stromspitzenwertes (61), und einer mit der Auswerteschaltung (30) verbundenen Regeleinheit, auf die ein Ausgangswert der Auswerteschaltung als Eingangsgröße aufgeschaltet ist,
**dadurch gekennzeichnet,**
**dass** die Auswerteschaltung (30) zur Erfassung des maximalen Stromspitzenwerts jeweils innerhalb eines Takts (65) der Pulsweitenmodulation ausgelegt ist und als eine Vergleichsschaltung (32) ausgebildet ist, die den in der Rückleitung (9) gemessenen Strom mit einem Referenzwert vergleicht und bei Überschreiten des Referenzwerts als Ausgangswert ein Triggersignal ausgibt.

5. Schaltungsanordnung (1) nach Anspruch 4,
**dadurch gekennzeichnet,**
**dass** die Speiseschaltung als ein Umschaltemittel einen PWM-Umrichter (11) enthält.

6. Schaltungsanordnung (1) nach Anspruch 4 oder 5,
**dadurch gekennzeichnet,**
**dass** der Stromsensor (25) einen ohmschen Widerstand (47) umfasst.

## Claims

1. Method for controlling a polyphase brushless electric motor (3), with the motor phase currents (57, 58, 59) which are associated with the phases being produced by means of pulse-width modulation by clocked variation of the respectively applied electrical potential, with the motor phase currents (57, 58, 59) flowing back from the electric motor (3) via a common return line (9),
**characterized**
**in that** within each clock cycle (65) of the pulse-width modulation the maximum peak current value (61) of all the motor phase currents (57, 58, 59) in the return line (9) is detected, and is compared with a predetermined reference value, and the comparison result is included in a controlled variable.

2. Method according to Claim 1,
**characterized**
**in that** the control process starts when the measured current exceeds the reference value.

3. Method according to Claim 1 or 2,
**characterized**
**in that** the peak current value (61) is detected quantitatively by variation of the reference value.

4. Circuit arrangement (1) for controlling a polyphase brushless electric motor (3), in particular in order to carry out the method according to one of the preceding claims, having a DC circuit (5) and having a feed circuit, which is connected in the DC circuit (5) between a supply line (8) and a return line (9), which in each case can be connected to the motor terminals (21) of the windings of the electric motor (3), and contains switching means, with the switching means being provided by means of pulse-width modulation for clocked variation of the potential to be applied to each of the motor terminals (21), and having a current sensor (25) which is connected in the return line (9), and furthermore having an evaluation circuit (30), which is connected to the current sensor (25), for detection of a peak current value (61), and a control unit which is connected to the evaluation circuit (30) and to which an output value from the evaluation circuit is applied as an input variable,
**characterized**
**in that** the evaluation circuit (30) is designed to detect the maximum peak current value within each clock cycle (65) of the pulse-width modulation and is in the form of a comparison circuit (32), which compares the current measured in the return line (9) with a reference value, and emits a trigger signal as an output value when the reference value is exceeded.

5. Circuit arrangement (1) according to Claim 4,
**characterized**
**in that** the feed circuit contains a PWM converter (11) as the switching means.

6. Circuit arrangement (1) according to Claim 4 or 5,
**characterized**
**in that** the current sensor (25) has a non-reactive resistor (47).

## Revendications

1. Procédé pour commander un moteur multi-phasé à courant continu sans balai (3), dans lequel les courants de phase du moteur (57, 58, 59) coordonnés aux phases sont générés par une variation synchronisée du potentiel électrique respectivement présent au moyen d'une modulation de largeur d'impulsions, dans lequel les courants de phase du moteur (57,58,59) ressortent du moteur électrique (3) via une conduite de retour (9) commune,
**caractérisé en ce que**
respectivement à l'intérieur d'un cycle (65) de la modulation de largeur d'impulsion dans la conduite de retour (9), la valeur de pointe de courant maximale (61) de tous les courants de phase du moteur (57, 58, 59) est détectée et comparée avec une valeur de référence prescrite et **en ce que** le résultat de la comparaison trouve une entrée dans une grandeur de réglage.

2. Procédé selon la revendication 1,
**caractérisé en ce que**
la commande est adaptée lorsque le courant mesuré dépasse la valeur de référence.

3. Procédé selon la revendication 1 ou 2,
**caractérisé en ce que**
la valeur de pointe du courant (61) est détectée quantitativement du fait d'une variation de la valeur de référence.

4. Dispositif de circuit (1) pour commander un moteur multi-phasé à courant continu sans balai (3), notamment pour mettre en ouvre le procédé selon une des revendications précédentes, comportant un circuit à tension continue (5) et un circuit d'alimentation branché dans le circuit à tension continue (5) entre une conduite d'amenée (8) et une conduite de retour (9), pouvant être respectivement raccordé aux bornes de moteur (21) des enroulements du moteur électrique (3), contenant des moyens de commutation, moyennant quoi les moyens de commutation sont prévus afin de varier de manière synchronisée le potentiel à appliquer respectivement aux bornes du moteur (21) au moyen d'une modulation de largeur d'impulsions, et comportant un capteur de courant (25) branché dans la conduite de retour (9), et comprenant en outre un circuit d'évaluation (30) raccordé au capteur de courant (25) afin de détecter une valeur de pointe du courant (61) et une unité de régulation reliée au circuit d'évaluation (30), dans laquelle est injectée en tant que grandeur d'entrée une valeur de sortie du circuit d'évaluation,
**caractérisé en ce que**
le circuit d'évaluation (30) est conçu afin de détecter la valeur de pointe du courant maximale respectivement à l'intérieur d'un cycle (65) de la modulation de largeur d'impulsion et est réalisé comme un circuit de comparaison (32), qui compare le courant mesuré dans la conduite de retour (9) avec une valeur de référence et émet un signal déclencheur en tant que valeur de sortie lorsque la valeur de référence est dépassée.

5. Dispositif de circuit (1) selon la revendication 4,
**caractérisé en ce que**
le circuit d'alimentation contient un convertisseur de modulation de largeur d'impulsion (11) en tant que moyen de commutation.

6. Dispositif de circuit (1) selon une des revendications 4 ou 5,
**caractérisé en ce que**
le capteur de courant (25) comprend une résistance ohmique (47).
